(19) **Europäisches Patentamt**

**European Patent Office**

**Office européen des brevets**

(11) **EP 1 676 479 A1**

(12) **EUROPÄISCHE PATENTANMELDUNG**

(43) Veröffentlichungstag:
05.07.2006 Patentblatt 2006/27

(21) Anmeldenummer: 06007823.5

(22) Anmeldetag: 23.05.2001

(51) Int Cl.:
*A01N 43/80* (2006.01)   *A01N 47/44* (2006.01)
*A01N 43/40* (2006.01)   *A01N 35/08* (2006.01)
*A01N 35/02* (2006.01)   *A01N 33/02* (2006.01)
*A01N 31/08* (2006.01)

(84) Benannte Vertragsstaaten:
**AT BE CH CY DE DK ES FI FR GB GR IE IT LI LU
MC NL PT SE TR**

(30) Priorität: **31.08.2000 DE 10042894**

(62) Dokumentnummer(n) der früheren Anmeldung(en)
nach Art. 76 EPÜ:
**01951516.2 / 1 315 419**

(71) Anmelder: **THOR GmbH
67346 Speyer (DE)**

(72) Erfinder:
• **Antoni-Zimmermann, Dagmar
67346 Speyer (DE)**

• **Baum, Rüdiger
68753 Waghäusel (DE)**
• **Schmidt, Hans-Jürgen
67346 Speyer (DE)**
• **Wunder, Thomas, Dr.
67435 Neustadt/Weinstrasse (DE)**

(74) Vertreter: **Hiltl, Elmar et al
Diehl & Partner
Augustenstrasse 46
80333 München (DE)**

Bemerkungen:
Diese Anmeldung ist am 13 - 04 - 2006 als
Teilanmeldung zu der unter INID-Kode 62 erwähnten
Anmeldung eingereicht worden.

(54) **Biozidzusammensetzung**

(57)     Angegeben wird eine Biozidzusammensetzung mit einem Gehalt an 2-Methylisothiazolin-3-on als biozidem Wirkstoff und an mindestens einem weiteren bioziden Wirkstoff aus der Gruppe 2-Brom-2-nitro-1,3-propandiol, Polyhexamethylenbiguanid, o-Phenylphenol, Pyrithione, N-Butyl-1,2-benzisothiazolin-3-on, N-Hydroxymethyl-1,2-benzisothiazolin-3-on und Benzalkoniumchloride, wobei in der Zusammensetzung das Gewichtsverhältnis von 2-Methylisothiazolin-3-on zu 5-Chlor-2-methylisothiazolin-3-on mindestens 100:1 beträgt.

EP 1 676 479 A1

Printed by Jouve, 75001 PARIS (FR)

## Beschreibung

Die Erfindung betrifft eine Biozidzusammensetzung als Zusatz zu Stoffen, die von schädlichen Mikroorganismen befallen werden können, mit einem Gehalt an 2-Methylisothiazolin-3-on (MIT) als biozidem Wirkstoff und mindestens einem weiteren bioziden Wirkstoff.

Biozide Mittel werden in vielen Bereichen eingesetzt, beispielsweise zur Bekämpfung von schädlichen Bakterien, Pilzen oder Algen. Es ist seit langem bekannt, in solchen Zusammensetzungen 4-Isothiazolin-3-one (die auch als 3-Isothiazolone bezeichnet werden) einzusetzen, da sich unter diesen sehr wirksame biozide Verbindungen befinden.

Eine dieser Verbindungen ist 5-Chlor-2-methylisothiazolin-3-on (CIT). Sie weist zwar eine gute biozide Wirkung auf, hat aber bei ihrer praktischen Handhabung verschiedene Nachteile. Beispielsweise löst die Verbindung bei Personen, die damit umgehen, häufig Allergien aus. Auch bestehen in manchen Ländern gesetzliche Beschränkungen für den AOX-Wert von Industrieabwässern, d. h. es darf im Wasser eine bestimmte Konzentration von an Aktivkohle adsorbierbaren organischen Chlor-, Brom- und Iodverbindungen nicht überschritten werden. Dies verhindert dann den Einsatz von CIT im gewünschten Umfang. Ferner ist die Stabilität dieser Verbindung unter bestimmten Bedingungen, z. B. bei hohen pH-Werten oder in Anwesenheit von Nucleophilen oder Reduktionsmitteln, nicht ausreichend.

Ein weiteres bekanntes Isothiazolin-3-on mit biozider Wirkung ist MIT. Die Verbindung vermeidet zwar verschiedene Nachteile von CIT, beispielsweise das hohe Allergierisiko, hat aber eine wesentlich geringere biozide Wirkung. Ein einfacher Austausch von CIT durch MIT ist daher nicht möglich.

Es ist auch schon bekannt, Kombinationen aus verschiedenen Isothiazolin-3-onen oder Kombinationen aus mindestens einem Isothiazolin-3-on und anderen Verbindungen zu benutzen. Beispielsweise ist in der EP 0676140 A1 eine synergistische biozide Zusammensetzung beschrieben, die MIT und 2-n-Octylisothiazolin-3-on enthält.

Aus der US 5328926 sind synergistische Biozidzusammensetzungen bekannt, die Kombinationen aus 1,2-Benzisothiazolin-3-on und einer Iodpropargylverbindung sind. Als eine solche Verbindung ist beispielsweise 3-Iodpropargyl-N-butylcarbamat genannt.

Der Erfindung liegt die Aufgabe zugrunde, eine Biozidzusammensetzung mit einem Gehalt an MIT als biozidem Wirkstoff und an mindestens einem weiteren bioziden Wirkstoff anzugeben, wobei die Biozidzusammensetzung weitgehend frei von CIT ist, das heißt, daß darin das Gewichtsverhältnis von MIT zu CIT mindestens 100:1 beträgt. Außerdem sollen die Komponenten der Biozidzusammensetzung synergistisch zusammenwirken, so daß sie bei ihrem gleichzeitigen Einsatz in geringeren Konzentrationen verwendet werden können als bei ihrer Einzelverwendung. So sollen der Mensch und die Umwelt weniger belastet sowie die Kosten der Bekämpfung schädlicher Mikroorganismen gesenkt werden.

Diese Aufgabe löst die Erfindung durch eine Biozidzusammensetzung der eingangs genannten Art, die dadurch gekennzeichnet ist, daß sie als weiteren bioziden Wirkstoff mindestens eine Verbindung aus der Gruppe 2-Brom-2-nitro-1,3-propandiol (Bronopol, BNP), Polyhexamethylenbiguanid (PMG), o-Phenylphenol (OPP), Pyrithione, vorzugsweise Zinkpyrithion (ZnPy), Natriumpyrithion (NaPy), Kupferpyrithion (CuPy) und Eisenpyrithion (FePy), N-Butyl-1,2-benzisothiazolin-3-on (BBIT), N-Hydroxymethyl-1,2-benzisothiazolin-3on (HMBIT) und Benzalkoniumchloride, vorzugsweise Dimethylbenzalkoniumchlorid (BAC), enthält. Die vorgenannten weiteren bioziden Wirkstoffe können jeweils einzeln oder in einer Kombination aus mindestens zwei von ihnen neben dem MIT in der Biozidzusammensetzung vorliegen.

Die erfindungsgemäße Biozidzusammensetzung zeichnet sich unter anderem dadurch aus, daß die Kombination aus MIT und einem der vorgenannten weiteren bioziden Wirkstoffe synergistisch wirkt und deshalb mit einer geringeren Gesamtkonzentration der bioziden Komponenten einsetzbar ist.

Ferner hat die Biozidzusammensetzung der Erfindung den Vorteil, daß sie bisher in der Praxis benutzte, aber mit Nachteilen bezüglich Gesundheit und Umwelt behaftete Wirkstoffe, z. B. das CIT, ersetzen kann. Außerdem kann die erfindungsgemäße Biozidzusammensetzung bei Bedarf nur mit Wasser als günstigem Medium hergestellt werden. Auch ermöglicht es die Erfindung, durch den Zusatz weiterer Wirkstoffe, die Zusammensetzung speziellen Zielen anzupassen, beispielsweise im Sinne einer erhöhten bioziden Wirkung, eines verbesserten Langzeitschutzes der von Mikroorganismen befallenen Stoffe, einer verbesserten Verträglichkeit mit den zu schützenden Stoffen oder eines verbesserten toxikologischen oder ökotoxikologischen Verhaltens.

Die erfindungsgemäße Biozidzusammensetzung enthält das MIT und den vorgenannten weiteren bioziden Wirkstoff normalerweise im Gewichtsverhältnis von 1:100 bis 100:1, vorzugsweise im Gewichtsverhältnis von 1:20 bis 10:1 oder insbesondere im Gewichtsverhältnis 20:80 bis 80:20.

Vorzugsweise ist jeweils das MIT und der weitere biozide Wirkstoff in der erfindungsgemäßen Zusammensetzung in einer Konzentration von 1 bis 50 Gew%, bezogen auf die gesamte Biozidzusammensetzung, enthalten.

In der Biozidzusammensetzung liegen das MIT und der vorgenannte weitere biozide Wirkstoff in einer Gesamtkonzentration von vorzugsweise 0,1 bis 100 Gew.%, mehr bevorzugt von 1 bis 100 Gew%, insbesondere von 1 bis 50 Gew.%, ganz besonders bevorzugt von 1 bis 30 Gew% und am meisten bevorzugt von 1 bis 20 Gew.%, jeweils bezogen auf die gesamte Biozidzusammensetzung, vor.

Es ist zweckmäßig, die Biozide der erfindungsgemäßen Zusammensetzung in Kombination mit einem polaren oder unpolaren flüssigen Medium einzusetzen. Dabei kann dieses Medium beispielsweise in der Biozidzusammensetzung und/oder in dem zu konservierenden Stoff vorgegeben sein.

Bevorzugte polare flüssige Medien sind Wasser, ein Alkohol, wie ein aliphatischer Alkohol mit 1 bis 4 Kohlenstoffatomen, z.B. Ethanol und Isopropanol, ein Ester, ein Glykol, z.B. Ethylenglykol, Diethylenglykol, 1,2-Propylenglykol, Dipropylenglykol und Tripropylenglykol, ein Glykolether, z.B. Butylglykol und Butyldiglykol, ein Glykolester, z.B. Butyldiglykolacetat oder 2,2,4-Trimethylpentandiolmonoisobutyrat, ein Polyethylenglykol, ein Polypropylenglykol, N,N-Dimethylformamid oder ein Gemisch aus solchen Stoffen.

Als unpolare flüssige Medien dienen z. B. Aromaten, vorzugsweise Xylol, Toluol und Alkylbenzole, sowie Paraffine, unpolare Ester, wie Phthalate und Fettsäureester, epoxidierte Fettsäuren und deren Derivate sowie Siliconöle.

Die erfindungsgemäße Biozidzusammensetzung kann auch gleichzeitig mit einem polaren und einem unpolaren flüssigen Medium kombiniert werden.

Die erfindungsgemäße Biozidzusammensetzung kann neben MIT und den vorgenannten weiteren bioziden Wirkstoffen noch einen oder mehrere zusätzliche biozide Wirkstoffe enthalten, die in Abhängigkeit vom Anwendungsgebiet ausgewählt werden. Spezielle Beispiele für solche zusätzlichen bioziden Wirkstoffe sind nachfolgend angegeben.

Benzylalkohol

2,4-Dichlorbenzylalkohol

2-Phenoxyethanol

2-Phenoxyethanolhemiformal

Phenylethylalkohol

5-Brom-5-nitro-1,3-dioxan

Dimethyloldimethylhydantoin

Glyoxal

Glutardialdehyd

Sorbinsäure

Benzoesäure

Salicylsäure

p-Hydroxybenzoesäureester

Chloracetamid

N-Methylolchloracetamid

Phenole, wie p-Chlor-m-kresol

N-Methylolharnstoff,

N,N'-Dimethylolharnstoff

Benzylformal

4,4-Dimethyl-1,3-oxazolidin

1,3,5-Hexahydrotriazinderivate

Quartäre Ammoniumverbindungen, wie

 N-Alkyl-N,N-dimethylbenzylammoniumchlorid und Di-n-decyldimethylammoniumchlord

Cetylpyridiniumchlorid

Diguanidin

Chlorhexidin

1,2-Dibrom-2,4-dicyanobutan

3,5-Dichlor-4-hydroxybenzaldehyd

Ethylenglykolhemiformal

Tetra-(hydroxymethyl)-phosphoniumsalze

Dichlorophen

2,2-Dibrom-3-nitrilopropionsäureamid

3-Iod-2-propinyl-N-butylcarbamat

Methyl-N-benzimidazol-2-ylcarbamat

2-n-Octylisothiazolin-3-on

4,5-Dichlor-2-n-octylisothiazolin-3-on

4,5-Trimethylen-2-methylisothiazolin-3-on

2,2'-Dithiodibenzoesäuredi-N-methylamid

2-Thiocyanomethylthiobenzthiazol

C-Formale, wie

2-Hydroxymethyl-2-nitro-1,3-propandiol

Methylenbisthiocyanat

Umsetzungsprodukte von Allantoin mit Formaldehyd

Die erfindungsgemäße Biozidzusammensetzung kann daneben noch andere übliche Bestandteile enthalten, die dem Fachmann auf dem Gebiet der Biozide als Zusatzstoffe bekannt sind. Es sind dies z.B. Verdickungsmittel, Entschäumer, Stoffe zur Einstellung und Stabilisierung des pH-Werts, Duftstoffe, Dispergierhilfsmittel, färbende Stoffe sowie Stabilisatoren gegen Verfärbungen, z. B. Komplexbildner, und gegen Wirkstoffabbau.

Das MIT ist eine bekannte Verbindung und kann beispielsweise gemäß der US 5466818 hergestellt werden. Das dabei erhaltene Reaktionsprodukt läßt sich z.B. durch Säulenchromatographie reinigen.

Das BNP ist im Handel erhältlich, beispielsweise von der Firma BASF AG unter dem Handelsnamen "Myacide AS".

Das PMG ist von der Firma Avecia unter dem Handelsnamen "Vantocil IB" erhältlich.

Das OPP ist von der Firma Bayer unter dem Handelsnamen "Preventol O extra" erhältlich.

Pyrithione sind von der Firma Arch Chemicals erhältlich, beispielsweise das ZnPy unter dem Handelsnamen "Zinc-Omadine" und das NaPy unter dem Handelsnamen "Natrium-Omadine". Das CuPy und das FePy sind nach bekannten Verfahren durch Umsetzen von NaPy mit Kupfer- bzw. Eisensalzen zugänglich.

Das BBIT ist von der Firma Avecia unter dem Handelsnamen "Vanquish 100" erhältlich.

Das HMBIT kann durch Kristallisation aus einem Reaktionsgemisch aus Formaldehyd und BIT gewonnen werden.

Das BAC ist von der Firma Thor GmbH unter dem Handelsnamen "BAC 50" erhältlich.

Die erfindungsgemäße Biozidzusammensetzung kann auf sehr unterschiedlichen Gebieten eingesetzt werden. Sie eignet sich beispielsweise für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen, Tensidlösungen, Kraftstoffen, Reinigungsmitteln, kosmetischen Produkten, Wasserkreisläufen, Polymerdispersionen und Kühlschmierstoffen gegen den Befall durch beispielsweise Bakterien, filamentöse Pilze, Hefen und Algen.

In diesen zu konservierenden Stoffen werden die Biozide im allgemeinen in einer Gesamtkonzentration im Bereich von 1 bis 100.000 ppm, vorzugsweise von 10 bis 10.000 ppm, bezogen auf den gesamten zu konservierenden Stoff, eingesetzt.

Bei der praktischen Anwendung kann die Biozidzusammensetzung entweder als fertiges Gemisch oder durch getrennte Zugabe der Biozide und der gegebenenfalls übrigen Komponenten der Zusammensetzung in den zu konservierenden Stoff eingebracht werden.

Die Beispiele erläutern die Erfindung.

Beispiel 1

Mit diesem Beispiel wird der Synergismus von Kombinationen aus MIT und BNP in der erfindungsgemäßen Biozidzusammensetzung aufgezeigt.

Dazu wurden wäßrige Gemische mit unterschiedlichen Konzentrationen an MIT und BNP hergestellt, und es wurde die Wirkung dieser Gemische auf Pseudomonas aeruginosa geprüft.

Die wäßrigen Gemische enthielten außer der Biozidkomponente und Wasser noch ein Nährmedium, nämlich eine handelsübliche Müller-Hinton-Bouillon. Die Zelldichte betrug $10^6$ Keime/ml. Die Inkubationszeit war 72 h bei 25 °C. Jede Probe wurde mit 120 U/min auf einem Inkubationsschüttler bebrütet.

In der nachfolgenden Tabelle I sind die verwendeten Konzentrationen von MIT und BNP angegeben. Ferner ist daraus ersichtlich, ob jeweils ein Wachstum des Mikroorganismus stattfand (Symbol "+") oder nicht (Symbol "-").

Die Tabelle I zeigt somit auch die minimalen Hemmkonzentrationen (MHK). Hiernach ergibt sich beim Einsatz von MIT allein ein MHK-Wert von 40 ppm und beim Einsatz von BNP allein ein MHK-Wert von 20 ppm. Dagegen sind die MHK-Werte von Gemischen aus MIT und BNP deutlich niedriger, das heißt, MIT und BNP wirken in ihrer Kombination synergistisch.

Tabelle I MHK-Werte von MIT + BNP bezüglich Pseudomonas aeruginosa bei einer Inkubationszeit von 72 h/25 °C

| Konzentration MIT (ppm) | Konzentration BNP (ppm) | | | | | | | |
|---|---|---|---|---|---|---|---|---|
| | 50 | 40 | 30 | 20 | 15 | 10 | 5 | 0 |
| 60 | - | - | - | - | - | - | - | - |
| 50 | - | - | - | - | - | - | - | - |
| 40 | - | - | - | - | - | - | - | - |
| 30 | - | - | - | - | - | - | - | + |
| 20 | - | - | - | - | - | - | - | + |
| 15 | - | - | - | - | - | - | - | + |
| 10 | - | - | - | - | - | - | + | + |
| 5 | - | - | - | - | - | + | + | + |

Tabelle fortgesetzt

| Konzentration MIT (ppm) | Konzentration BNP (ppm) | | | | | | | |
|---|---|---|---|---|---|---|---|---|
| | 50 | 40 | 30 | 20 | 15 | 10 | 5 | 0 |
| 0 | - | - | - | - | + | + | + | + |

Der auftretende Synergismus wird mittels der in der Tabelle II berechneten Werte des Synergieindex zahlenmäßig dargestellt. Die Berechnung des Synergieindex erfolgt nach der Methode von F. C. Kull et al., Applied Microbiology, Bd. 9 (1961), S. 538. Hier wird der Synergieindex mit der folgenden Formel berechnet:

$$\text{Synergieindex SI} = Q_a/Q_A + Q_b/Q_B.$$

Bei der Anwendung dieser Formel auf das hier geprüfte Biozidsystem haben die Größen in der Formel folgende Bedeutung:

$Q_a$ = Konzentration von MIT im Biozidgemisch aus MIT und BNP

$Q_A$ = Konzentration von MIT als einziges Biozid

$Q_b$ = Konzentration von BNP im Biozidgemisch aus MIT und BNP

$Q_B$ = Konzentration von BNP als einziges Biozid

Wenn der Synergieindex einen Wert von über 1 aufweist, bedeutet dies, daß ein Antagonismus vorliegt. Wenn der Synergieindex den Wert 1 annimmt, bedeutet dies, daß eine Addition der Wirkung der beiden Biozide gegeben ist. Wenn der Synergieindex einen Wert von unter 1 annimmt, bedeutet dies, daß ein Synergismus der beiden Biozide besteht.
Bei gleichzeitigem Einsatz von MIT und BNP trat ein Synergismus ein. Die Berechnung des Synergieindex ergibt sich aus der Tabelle II. Hiernach lag bei Pseudomonas aeruginosa der niedrigste Synergieindex (0,63) bei einem Gemisch aus 75,0 Gew.% MIT und 25,0 Gew.% BNP.

Tabelle II Berechnung des Synergieindex von MIT + BNP bezüglich Pseudomonas aeruginosa bei einer Inkubationszeit von 72 h/25 °C

| MHK bei | | | Konzentration | | $Q_a/Q_A$ | $Q_b/Q_B$ | Synergieindex |
|---|---|---|---|---|---|---|---|
| MIT- Konzentration $Q_a$ (ppm) | BNP-Konzentration $Q_b$ ppm) | Gesamtkonzentration MIT + BNP $Q_a + Q_b$ (ppm) | MIT (Gew.%) | BNP (Gew.%) | | | $Q_a/Q_A + Q_b/Q_B$ |
| 0 | 20 | 20 | 0,0 | 100,0 | 0,00 | 1,00 | 1,00 |
| 5 | 15 | 20 | 25,0 | 75,0 | 0,13 | 0,75 | 0,88 |
| 10 | 10 | 20 | 50,0 | 50,0 | 0,25 | 0,50 | 0,75 |
| 15 | 5 | 20 | 75,0 | 25,0 | 0,38 | 0,25 | 0,63 |
| 20 | 5 | 25 | 80,0 | 20,0 | 0,50 | 0,25 | 0,75 |
| 40 | 0 | 40 | 100,0 | 0,0 | 1,00 | 0,00 | 1,00 |

Beispiel 2

Ähnlich wie im Beispiel 1 wird der Synergismus von MIT und PMG gegenüber dem Mikroorganismus Pseudomonas aeruginosa ausgezeigt.

Die Versuchsansätze enthielten wieder eine Müller-Hinton-Bouillon als Nährmedium. Die Zelldichte betrug $10^6$ Keime/ml. Die Inkubationszeit war 48 h bei 25 °C. Jede Probe wurde mit 120 U/min auf einem Inkubationsschüttler bebrütet.

Aus der nachfolgenden Tabelle III sind die MHK-Werte der geprüften Biozidzusammensetzungen ersichtlich. Der MHK-Wert beim Einsatz von MIT allein betrug 40 ppm und beim Einsatz von PMG allein 30 ppm.

Tabelle III MHK-Werte von MIT + PMG bezüglich Pseudomonas aeruginosa bei einer Inkubationszeit von 48 h/25 °C

| Konzentration MIT (ppm) | Konzentration PMG (ppm) | | | | | | | |
|---|---|---|---|---|---|---|---|---|
| | 100 | 75 | 50 | 40 | 30 | 20 | 10 | 0 |
| 50 | - | - | - | - | - | - | - | - |
| 40 | - | - | - | - | - | - | - | - |
| 30 | - | - | - | - | - | - | - | + |
| 20 | - | - | - | - | - | - | - | + |
| 15 | - | - | - | - | - | - | - | + |
| 10 | - | - | - | - | - | - | - | + |
| 7,5 | - | - | - | - | - | - | - | + |
| 5 | - | - | - | - | - | - | - | + |
| 0 | - | - | - | - | - | + | + | + |

Bei gleichzeitigem Einsatz von MIT und PMG trat ein Synergismus ein. Die Berechnung des Synergieindex ergibt sich aus der Tabelle IV. Hiernach lag bei Pseudomonas aeruginosa der niedrigste Synergieindex (0,46) bei einem Gemisch aus 33,3 Gew.% MIT und 66,7 Gew.% PMG.

Tabelle IV Berechnung des Synergismus von MIT + PMG bezüglich Pseudomonas aeruginosa bei einer Inkubationszeit von 48 h/25 °C

| MHK bei | | | Konzentration | | $Q_a/Q_A$ | $Q_b/Q_B$ | Synergieindex |
|---|---|---|---|---|---|---|---|
| MIT-Konzentration $Q_a$ (ppm) | PMG-Konzentration $Q_b$ ppm) | Gesamtkonzentration MIT + PMG $Q_a + Q_b$ (ppm) | MIT (Gew.%) | PMG (Gew.%) | | | $Q_a/Q_A + Q_b/Q_B$ |
| 0 | 30 | 30 | 0,0 | 100,0 | 0,00 | 1,00 | 1,00 |
| 5 | 20 | 25 | 20,0 | 80,0 | 0,13 | 0,67 | 0,79 |
| 5 | 10 | 15 | 33,3 | 66,7 | 0,13 | 0,33 | 0,46 |
| 7,5 | 10 | 17,5 | 42,9 | 57,1 | 0,19 | 0,33 | 0,52 |
| 10 | 10 | 20 | 50,0 | 50,0 | 0,25 | 0,33 | 0,58 |
| 15 | 10 | 25 | 60,0 | 40,0 | 0,38 | 0,33 | 0,71 |
| 20 | 10 | 30 | 66,7 | 33,3 | 0,50 | 0,33 | 0,83 |
| 40 | 0 | 40 | 100,0 | 0,0 | 1,00 | 0,00 | 1,00 |

Beispiel 3

Ähnlich wie im Beispiel 1 wurde der Synergismus von MIT und OPP gegenüber dem Mikroorganismus Pseudomonas aeruginosa aufgezeigt.

Die Versuchsansätze enthielten wieder eine Müller-Hinton-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle V sind die MHK-Werte der geprüften Biozidzusammensetzung ersichtlich. Der MHK-Wert beim Einsatz von MIT allein betrug 40 ppm und beim Einsatz von OPP allein 750 ppm.

Tabelle V MHK-Werte von MIT + OPP bezüglich Pseudomonas aeruginosa bei einer Inkubationszeit von 72 h/25 °C

| Konzentration MIT (ppm) | Konzentration OPP (ppm) | | | | | | | | | | |
|---|---|---|---|---|---|---|---|---|---|---|---|
| | 750 | 500 | 375 | 250 | 200 | 150 | 50 | 37,5 | 25 | 12,5 | 0 |
| 50 | - | - | - | - | - | - | - | - | - | - | - |
| 40 | - | - | - | - | - | - | - | - | - | - | - |
| 30 | - | - | - | - | - | - | + | + | + | + | + |
| 25 | - | - | - | - | - | - | + | + | + | + | + |
| 20 | - | - | - | - | - | - | + | + | + | + | + |
| 15 | - | - | - | - | - | - | + | + | + | + | + |
| 12,5 | - | - | - | - | - | + | + | + | + | + | + |
| 10 | - | - | - | - | - | + | + | + | + | + | + |
| 7,5 | - | - | - | - | + | + | + | + | + | + | + |
| 5 | - | - | + | + | + | + | + | + | + | + | + |
| 2,5 | - | - | + | + | + | + | + | + | + | + | + |
| 0 | - | + | + | + | + | + | + | + | + | + | + |

Bei gleichzeitigem Einsatz von MIT und OPP trat ein Synergismus ein. Die Berechnung des Synergieindex ergibt sich aus der Tabelle VI. Hiernach lag bei Pseudomonas aeruginosa der niedrigste Synergieindex (0,52) bei einem Gemisch aus 2,9 bis 4,8 Gew.% MIT und 97,1 bis 95,2 Gew.% OPP.

Tabelle VI Berechnung des Synergismus von MIT + OPP bezüglich Pseudomonas aeruginosa bei einer Inkubationszeit von 72 h/25 °C

| MHK bei | | | Konzentration | | $Q_a/Q_A$ | $Q_b/Q_B$ | Synergieindex |
|---|---|---|---|---|---|---|---|
| MIT-Konzentration $Q_a$ (ppm) | OPP-Konzentration $Q_b$ (ppm) | Gesamtkonzentration MIT + OPP $Q_a + Q_b$ (ppm) | MIT (Gew.%) | OPP (Gew.%) | | | $Q_a/Q_A + Q_b/Q_B$ |
| 0 | 750 | 750 | 0,0 | 100,0 | 0,00 | 1,00 | 1,00 |
| 2,5 | 500 | 502,5 | 0,5 | 99,5 | 0,06 | 0,67 | 0,73 |
| 5 | 500 | 505 | 1,0 | 99,0 | 0,13 | 0,67 | 0,79 |
| 7,5 | 375 | 382,5 | 2,0 | 98,0 | 0,19 | 0,50 | 0,69 |
| 7,5 | 250 | 257,5 | 2,9 | 97,1 | 0,19 | 0,33 | 0,52 |
| 10 | 200 | 210 | 4,8 | 95,2 | 0,25 | 0,27 | 0,52 |
| 12,5 | 200 | 212,5 | 5,9 | 94,1 | 0,31 | 0,27 | 0,58 |
| 15 | 150 | 165 | 9.1 | 90,9 | 0,38 | 0,20 | 0,58 |
| 20 | 150 | 170 | 11,8 | 88,2 | 0,50 | 0,20 | 0,70 |
| 25 | 150 | 175 | 14,3 | 85,7 | 0,63 | 0,20 | 0,83 |
| 40 | 0 | 40 | 100,0 | 0,0 | 1,00 | 0,00 | 1,00 |

Beispiel 4

Ähnlich wie im Beispiel 1 wurde der Synergismus von MIT und ZnPy gegenüber dem Mikroorganismus Pseudomonas aeruginosa aufgezeigt.

Die Versuchsansätze enthielten wieder eine Müller-Hinton-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle VII sind die MHK-Werte der geprüften Biozidzusammensetzung ersichtlich. Der MHK-Wert beim Einsatz von MIT allein betrug 40 ppm und beim Einsatz von ZnPy allein über 100 ppm.

Tabelle VII MHK-Werte von MIT + ZnPy bezüglich Pseudomonas aeruginosa bei einer Inkubationszeit von 72 h/25 °C

| Konzentration MIT (ppm) | Konzentration ZnPy (ppm) | | | | | | | |
|---|---|---|---|---|---|---|---|---|
| | 100 | 75 | 50 | 40 | 30 | 20 | 10 | 0 |
| 100 | - | - | - | - | - | - | - | - - |
| 80 | - | - | - | - | - | - | - | - |
| 60 | - | - | - | - | - | - | - | - |
| 40 | - | - | - | - | - | - | - | - |
| 30 | - | - | - | - | - | - | - | + |
| 20 | - | - | - | - | - | - | - | + |
| 15 | - | - | - | - | - | - | - | + |
| 10 | - | - | - | - | - | - | - | + |
| 0 | + | + | + | + | + | + | + | + |

Bei gleichzeitigem Einsatz von MIT und ZnPy trat ein Synergismus ein. Die Berechnung des Synergieindex ergibt sich aus der Tabelle VIII. Dabei wurde für diese Berechnung im Fall des ZnPy ein MHK-Wert von 100 zugrunde gelegt. Hiernach lag bei Pseudomonas aeruginosa der niedrigste Synergieindex (0,35) bei einem Gemisch aus 50,0 Gew.% MIT und 50,0 Gew.% ZnPy.

Tabelle VIII Berechnung des Synergismus von MIT + ZnPy bezüglich Pseudomonas aeruginosa bei einer Inkubationszeit von 72 h/25 °C

| MHK bei | | Gesamtkonzentration MIT + ZnPy $Q_a + Q_b$ (ppm) | Konzentration | | $Q_a/Q_A$ | $Q_b/Q_B$ | Synergieindex |
|---|---|---|---|---|---|---|---|
| MIT-Konzentration $Q_a$ (ppm) | ZnPy-Konzentration $Q_b$ ppm) | | MIT (Gew.%) | ZnPy (Gew.%) | | | $Q_a/Q_A + O_b/Q_B$ |
| 0 | 100 | 100 | 0,0 | 100,0 | 0,00 | 1,00 | 1,00 |
| 10 | 10 | 20 | 50,0 | 50,0 | 0,25 | 0,10 | 0,35 |
| 15 | 10 | 25 | 60,0 | 40,0 | 0,38 | 0,10 | 0,48 |
| 20 | 10 | 30 | 66,7 | 33,3 | 0,50 | 0,10 | 0,60 |
| 30 | 10 | 40 | 75,0 | 25,0 | 0,75 | 0,10 | 0,85 |
| 40 | 0 | 40 | 100,0 | 0,0 | 1,00 | 0,00 | 1,00 |

<u>Beispiel 5</u>

Ähnlich wie im Beispiel 1 wurde der Synergismus von MIT und NaPy gegenüber dem Mikroorganismus Pseudomonas aeruginosa aufgezeigt.

Die Versuchsansätze enthielten wieder eine Müller-Hinton-Bouillon als Nährmedium. Die Zelldichte betrug $10^6$ Keime/ml. Die Inkubationszeit war 96 h bei 25 °C. Jede Probe wurde mit 120 U/min auf einem Inkubationsschüttler bebrütet.

Aus der nachfolgenden Tabelle IX sind die MHK-Werte der geprüften Biozidzusammensetzung ersichtlich. Der MHK-Wert beim Einsatz von MIT allein betrug 60 ppm und beim Einsatz von NaPy allein 200 ppm.

<u>Tabelle IX</u> MHK-Werte von MIT + NaPy bezüglich Pseudomonas aeruginosa bei einer Inkubationszeit von 96 h/25 °C

| Konzentration MIT (ppm) | Konzentration NaPy (ppm) | | | | | | | |
|---|---|---|---|---|---|---|---|---|
| | 300 | 200 | 150 | 100 | 75 | 50 | 25 | 0 |
| 100 | - | - | - | - | - | - | - | - |
| 80 | - | - | - | - | - | - | - | - |
| 60 | - | - | - | - | - | - | - | - |
| 40 | - | - | - | - | - | - | + | + |
| 30 | - | - | - | - | - | - | + | + |
| 20 | - | - | - | - | - | + | + | + |
| 15 | - | - | - | - | - | + | + | + |
| 10 | - | - | - | - | + | + | + | + |
| 0 | - | - | + | + | + | + | + | + |

Bei gleichzeitigem Einsatz von MIT und NaPy trat ein Synergismus ein. Die Berechnung des Synergieindex ergibt sich aus der Tabelle X. Hiernach lag bei Pseudomonas aeruginosa der niedrigste Synergieindex (0,63) bei einem Gemisch aus 16,7 Gew.% MIT und 83,3 Gew.% NaPy.

Tabelle X Berechnung des Synergismus von MIT + NaPy bezüglich Pseudomonas aeruginosa bei einer Inkubationszeit von 96 h/25 °C

| MHK bei | | | Konzentration | | $Q_a/Q_A$ | $Q_b/Q_B$ | Synergieindex |
|---|---|---|---|---|---|---|---|
| MIT-Konzentration $Q_a$ (ppm) | NaPy-Konzentration $Q_b$ ppm) | Gesamtkonzentration MIT + NaPy $Q_a + Q_b$ (ppm) | MIT (Gew.%) | NaPy (Gew.%) | | | $Q_a/Q_A + Q_b/Q_B$ |
| 0 | 200 | 200 | 0,0 | 100,0 | 0,00 | 1,00 | 1,00 |
| 10 | 150 | 160 | 6,3 | 93,8 | 0,17 | 0,75 | 0,92 |
| 10 | 100 | 110 | 9,1 | 90,9 | 0,17 | 0,50 | 0,67 |
| 15 | 75 | 90 | 16,7 | 83,3 | 0,25 | 0,38 | 0,63 |
| 20 | 75 | 95 | 21,1 | 78,9 | 0,33 | 0,38 | 0,71 |
| 30 | 50 | 80 | 37,5 | 62,5 | 0,50 | 0,25 | 0,75 |
| 40 | 50 | 90 | 44,4 | 55,6 | 0,67 | 0,25 | 0,92 |
| 60 | 0 | 60 | 100,0 | 0,0 | 1,00 | 0,00 | 1;00 |

Beispiel 6

Ähnlich wie im Beispiel 1 wurde der Synergismus von MIT und BBIT gegenüber dem Mikroorganismus Pseudomonas aeruginosa aufgezeigt.

Die Versuchsansätze enthielten wieder eine Müller-Hinton-Bouillon als Nährmedium. Die Zelldichte betrug $10^6$ Keime/ml. Die Inkubationszeit war 72 h bei 25 °C. Jede Probe wurde mit 120 U/min auf einem Inkubationsschüttler bebrütet.

Aus der nachfolgenden Tabelle XI sind die MHK-Werte der geprüften Biozidzusammensetzung ersichtlich. Der MHK-Wert beim Einsatz von MIT allein betrug 40 ppm und beim Einsatz von BBIT allein über 500 ppm.

Tabelle XI MHK-Werte von MIT + BBIT bezüglich Pseudomonas aeruginosa bei einer Inkubationszeit von 72 h/25 °C

| Konzentration MIT (ppm) | Konzentration BBIT (ppm) | | | | | | | |
|---|---|---|---|---|---|---|---|---|
| | 500 | 375 | 250 | 200 | 150 | 100 | 50 | 0 |
| 50 | - | - | - | - | - | - | - | - |
| 40 | - | - | - | - | - | - | - | - |
| 30 | - | - | - | - | - | - | - | + |
| 20 | - | - | - | - | - | - | - | + |
| 15 | - | - | - | - | - | - | - | + |
| 10 | - | - | - | - | - | - | + | + |
| 5 | + | + | + | + | + | + | + | + |
| 0 | + | + | + | + | + | + | + | + |

Bei gleichzeitigem Einsatz von MIT und BBIT trat ein Synergismus ein. Die Berechnung des Synergieiridex ergibt sich aus der Tabelle XII. Dabei wurde für diese Berechnung im Fall des BBIT ein MHK-Wert von 500 ppm zugrunde gelegt. Hiernach lag bei Pseudomonas aeruginosa der niedrigste Synergieindex (0,45) bei einem Gemisch aus 9,1 Gew. % MIT und 90,9 Gew.% BBIT.

Tabelle XII Berechnung des Synergismus von MIT + BBIT bezüglich Pseudomonas aeruginosa bei einer Inkubationszeit von 72 h/25 °C

| MHK bei | | | Konzentration | | $Q_a/Q_A$ | $Q_b/Q_B$ | Synergieindex |
|---|---|---|---|---|---|---|---|
| MIT-Konzentration $Q_a$ (ppm) | BBIT-Konzentration $Q_b$ ppm) | Gesamtkonzentration MIT + BBIT $Q_a + Q_b$ (ppm) | MIT (Gew.%) | BBIT (Gew.%) | | | $Q_a/Q_A + Q_b/Q_B$ |
| 0 | 500 | 500 | 0,0 | 100,0 | 0,00 | 1,00 | 1,00 |
| 10 | 100 | 110 | 9,1 | 90,9 | 0,25 | 0,20 | 0,45 |
| 15 | 50 | 65 | 23,1 | 76,9 | 0,38 | 0,10 | 0,48 |
| 20 | 50 | 70 | 28,6 | 71,4 | 0,50 | 0,10 | 0,60 |
| 30 | 50 | 80 | 37,5 | 62,5 | 0,75 | 0,10 | 0,85 |
| 40 | 0 | 40 | 100,0 | 0,0 | 1,00 | 0,00 | 1,00 |

Beispiel 7

Ähnlich wie im Beispiel 1 wurde der Synergismus von MIT und HMBIT gegenüber dem Mikroorganismus Pseudomonas aeruginosa aufgezeigt.

Die Versuchsansätze enthielten wieder eine Müller-Hinton-Bouillon als Nährmedium. Die Zelldichte betrug $10^6$ Keime/ml. Die Inkubationszeit war 48 h bei 30 °C. Jede Probe wurde mit 120 U/min auf einem Inkubationsschüttler bebrütet.

Aus der nachfolgenden Tabelle XIII sind die MHK-Werte der geprüften Biozidzusammensetzung ersichtlich. Der MHK-Wert beim Einsatz von MIT allein betrug 50 ppm und beim Einsatz von HMBIT allein 150 ppm.

Tabelle XIII MHK-Werte von MIT + HMBIT bezüglich Pseudomonas aeruginosa bei einer Inkubationszeit von 48 h/ 30 °C

| Konzentration MIT (ppm) | Konzentration HMBIT (ppm) | | | | | | | |
|---|---|---|---|---|---|---|---|---|
| | 150 | 100 | 75 | 50 | 25 | 10 | 5 | 0 |
| 50 | - | - | - | - | - | - | - | - |
| 40 | - | - | - | - | - | - | + | + |
| 30 | - | - | - | - | - | + | + | + |
| 20 | - | - | - | - | + | + | + | + |
| 15 | - | - | - | - | + | + | + | + |
| 10 | - | - | + | + | + | + | + | + |
| 5 | - | - | + | + | + | + | + | + |
| 0 | - | + | + | + | + | + | + | + |

Bei gleichzeitigem Einsatz von MIT und HMBIT trat ein Synergismus ein. Die Berechnung des Synergieindex ergibt sich aus der Tabelle XIV. Hiernach lag bei Pseudomonas aeruginosa der niedrigste Synergieindex (0,63) bei einem Gemisch aus 23,1 Gew.% MIT und 76,9 Gew.% HMBIT.

Tabelle XIV Berechnung des Synergismus von MIT + HMBIT bezüglich Pseudomonas aeruginosa bei einer Inkubationszeit von 48 h/30 °C

| MHK bei | | Gesamtkonzentration MIT + HMBIT $Q_a + Q_b$ (ppm) | Konzentration | | $Q_a/Q_A$ | $Q_b/Q_B$ | Synergieindex |
| MIT-Konzentration $Q_a$ (ppm) | HMBIT-Konzentration $Q_b$ ppm) | | MIT (Gew.%) | HMBIT (Gew.%) | | | $Q_a/Q_A$+ Qb/QB |
|---|---|---|---|---|---|---|---|
| 0 | 150 | 150 | 0,0 | 100,0 | 0,00 | 1,00 | 1,00 |
| 5 | 100 | 105 | 4,8 | 95,2 | 0,10 | 0,67 | 0,77 |
| 15 | 75 | 90 | 16,7 | 83,3 | 0,30 | 0,50 | 0,80 |
| 15 | 50 | 65 | 23,1 | 76,9 | 0,30 | 0,33 | 0,63 |
| 20 | 50 | 70 | 28,6 | 71,4 | 0,40 | 0,33 | 0,73 |
| 30 | 25 | 55 | 54,5 | 45,5 | 0,60 | 0,17 | 0,77 |
| 40 | 10 | 50 | 80,0 | 20,0 | 0,80 | 0,07 | 0,87 |
| 50 | 0 | 50 | 100,0 | 0,0 | 1,00 | 0,00 | 1,00 |

Beispiel 8

Ähnlich wie im Beispiel 1 wurde der Synergismus von MIT und BAC gegenüber dem Mikroorganismus Pseudomonas aeruginosa aufgezeigt.

Die Versuchsansätze enthielten wieder eine Müller-Hinton-Bouillon als Nährmedium. Die Zelldichte betrug $10^6$ Keime/ml. Die Inkubationszeit war 48 h bei 25 °C. Jede Probe wurde mit 120 U/min auf einem Inkubationsschüttler bebrütet.

Aus der nachfolgenden Tabelle XV sind die MHK-Werte der geprüften Biozidzusammensetzung ersichtlich. Der MHK-Wert bei Einsatz von MIT allein betrug 40 ppm und beim Einsatz von BAC allein 80 ppm.

Tabelle XV MHK-Werte von MIT + BAC bezüglich Pseudomonas aeruginosa bei einer Inkubationszeit von 48 h/25 °C

| Konzentration MIT (ppm) | Konzentration BAC (ppm) | | | | | | | | |
|---|---|---|---|---|---|---|---|---|---|
| | 100 | 80 | 60 | 50 | 40 | 30 | 20 | 10 | 0 |
| 60 | - | - | - | - | - | - | - | - | - |
| 50 | - | - | - | - | - | - | - | - | - |
| 40 | - | - | - | - | - | - | - | - | - |
| 30 | - | - | - | - | - | - | - | - | + |
| 20 | - | - | - | - | - | - | - | - | + |
| 15 | - | - | - | - | - | + | + | + | + |
| 10 | - | - | - | - | - | + | + | + | + |
| 5 | - | - | - | - | - | + | + | + | + |
| 0 | - | - | + | + | + | + | + | + | + |

Bei gleichzeitigem Einsatz von MIT und BAC trat ein Synergismus ein. Die Berechnung des Synergieindex ergibt sich aus der Tabelle XVI. Hiernach lag bei Pseudomonas aeruginosa der niedrigste Synergieindex (0,63) sowohl bei einem Gemisch aus 11,1 Gew.% MIT und 88,9 Gew.% BAC als auch bei einem Gemisch aus 66,7 Gew.% MIT und 33,3 Gew.% BAC.

Tabelle XVI Berechnung des Synergismus von MIT + BAC bezüglich Pseudomonas aeruginosa bei einer Inkubationszeit von 48 h/25 °C

| MHK bei | | | Konzentration | | $Q_a/Q_A$ | $Q_b/Q_B$ | Synergieindex |
|---|---|---|---|---|---|---|---|
| MIT-Konzentration $Q_a$ (ppm) | BAC-Konzentration $Q_b$ ppm) | Gesamtkonzentration MIT + BAC $Q_a + Q_b$ (ppm) | MIT (Gew.%) | BAC (Gew.%) | | | $Q_a/Q_A + Q_b/Q_B$ |
| 0 | 80 | 80 | 0,0 | 100,0 | 0,00 | 1,00 | 1,00 |
| 5 | 60 | 65 | 7,7 | 92,3 | 0,13 | 0,75 | 0,88 |
| 5 | 50 | 55 | 9,1 | 90,9 | 0,13 | 0,63 | 0,75 |
| 5 | 40 | 45 | 11,1 | 88,9 | 0,13 | 0,50 | 0,63 |
| 10 | 40 | 50 | 20,0 | 80,0 | 0,25 | 0,50 | 0,75 |
| 15 | 40 | 55 | 27,3 | 72,7 | 0,38 | 0,50 | 0,88 |
| 20 | 30 | 50 | 40,0 | 60,0 | 0,50 | 0,38 | 0,88 |
| 20 | 20 | 40 | 50,0 | 50,0 | 0,50 | 0,25 | 0,75 |
| 20 | 10 | 30 | 66,7 | 33,3 | 0,50 | 0,13 | 0,63 |
| 30 | 10 | 40 | 75,0 | 25,0 | 0,75 | 0,13 | 0,88 |
| 40 | 0 | 40 | 100,0 | 0,0 | 1,00 | 0,00 | 1,00 |

**Patentansprüche**

1. Biozidzusammensetzung als Zusatz zu Stoffen, die von schädlichen Mikroorganismen befallen werden können, mit einem Gehalt an 2-Methylisothiazolin-3-on als biozidem Wirkstoff und an mindestens einem weiteren bioziden Wirkstoff, **dadurch gekennzeichnet, daß** die Zusammensetzung als weiteren bioziden Wirkstoff mindestens eine Verbindung aus der Gruppe 2-Brom-2-nitro-1,3-propandiol, Polyhexamethylenbiguanid, o-Phenylphenol, Pyrithione, N-Butyl-1,2-benzisothiazolin-3-on, N-Hydroxymethyl-1,2-benzisothiazolin-3-on und Benzalkoniumchloride enthält sowie weitgehend frei von 5-Chlor-2-methylisothiazolin-3-on ist, wobei das Gewichtsverhältnis von 2-Methylisothiazolin-3-on zu 5-Chlor-2-methylisothiazolin-3-on mindestens 100:1 beträgt.

2. Biozidzusammensetzung nach Anspruch 1, **dadurch gekennzeichnet, daß** sie als Benzalkoniumchlorid das Dimethylbenzalkoniumchlorid enthält.

3. Biozidzusammensetzung nach Anspruch 1 oder 2, **dadurch gekennzeichnet, daß** sie das 2-Methylisothiazolin-3-on und den weiteren bioziden Wirkstoff im Gewichtsverhältnis von 1:100 bis 100:1 enthält.

4. Biozidzusammensetzung nach Anspruch 3, **dadurch gekennzeichnet, daß** sie das 2-Methylisothiazolin-3-on und den weiteren bioziden Wirkstoff im Gewichtsverhältnis von 20:80 bis 80:20 enthält.

5. Biozidzusammensetzung nach einem der Ansprüche 1 bis 4, **dadurch gekennzeichnet, daß** sie das 2-Methylisothiazolin-3-on in einer Konzentration von 1 bis 50 Gew.%, bezogen auf die gesamte Biozidzusammensetzung, enthält.

6. Biozidzusammensetzung nach einem der Ansprüche 1 bis 5, **dadurch gekennzeichnet, daß** sie den weiteren bioziden Wirkstoff in einer Konzentration von 1 bis 50 Gew.%, bezogen auf die gesamte Biozidzusammensetzung, enthält.

7. Biozidzusammensetzung nach einem der Ansprüche 1 bis 6, **dadurch gekennzeichnet, daß** sie das 2-Methylisothiazolin-3-on und den weiteren bioziden Wirkstoff in einer Gesamtkonzentration von 1 bis 100 Gew.%, bezogen auf die gesamte Biozidzusammensetzung, enthält.

8. Biozidzusammensetzung nach Anspruch 7, **dadurch gekennzeichnet, daß** sie das 2-Methylisothiazolin-3-on und den weiteren bioziden Wirkstoff in einer Gesamtkonzentration von 1 bis 30 Gew.%, bezogen auf die gesamte Biozidzusammensetzung, enthält.

9. Biozidzusammensetzung nach einem der Ansprüche 1 bis 8, **dadurch gekennzeichnet, daß** sie ein polares und/ oder ein unpolares flüssiges Medium enthält.

10. Biozidzusammensetzung nach Anspruch 9, **dadurch gekennzeichnet, daß** sie als ein polares flüssiges Medium Wasser, einen Alkohol, einen Ester, ein Glykol, einen Glykolether, einen Glykolester, ein Polyethylenglykol, ein Polypropylenglykol, N,N-Dimethylformamid, 2,2,4-Trimethylpentandiolmonoisobutyrat oder ein Gemisch aus mindestens zwei dieser Stoffe enthält.

11. Biozidzusammensetzung nach Anspruch 10, **dadurch gekennzeichnet, daß** das polare flüssige Medium Wasser ist.

12. Verwendung einer Biozidzusammensetzung nach einem der Ansprüche 1 bis 11 zur Bekämpfung von schädlichen Mikroorganismen.

13. Gegen schädliche Mikroorganismen konserviertes Stoffgemisch oder Material, **gekennzeichnet durch** einen Gehalt an einer Biozidzusammensetzung nach einem der Ansprüche 1 bis 11.

# EP 1 676 479 A1

**Europäisches Patentamt**

**EUROPÄISCHER RECHERCHENBERICHT**

Nummer der Anmeldung

EP 06 00 7823

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| P,X | DATABASE WPI<br>Section Ch, Week 200107<br>Derwent Publications Ltd., London, GB;<br>Class D22, AN 2001-061027<br>XP002178206<br>& WO 00/67578 A (SOMAR CORP)<br>16. November 2000 (2000-11-16)<br>* Zusammenfassung *<br>----- | 1,3-13 | INV.<br>A01N43/80<br><br>ADD.<br>A01N47/44<br>A01N43/40<br>A01N35/08<br>A01N35/02<br>A01N33/02<br>A01N31/08 |
| X | US 4 732 905 A (DONOFRIO DEBORAH K ET AL)<br>22. März 1988 (1988-03-22)<br>* Spalte 3, Zeile 17 - Spalte 4, Zeile 26;<br>Tabellen I,II *<br>----- | 1,3-13 | |
| X | EP 0 398 795 A (KATAYAMA CHEMICAL WORKS CO) 22. November 1990 (1990-11-22)<br>* Seite 3, Zeilen 3-33 *<br>* Seite 4, Zeilen 24,40; Beispiel 1 *<br>* Anspruch 5 *<br>----- | 1,3-13 | |
| X | WO 00/28823 A (CHOI KI SEUNG ;KIM JIN MAN (KR); PARK JEONG HO (KR); CHO MYUNG HO)<br>25. Mai 2000 (2000-05-25)<br>* Seite 4, Zeilen 6-20 *<br>* Seite 5, Zeile 22 - Seite 6, Zeile 23 *<br>----- | 1,3-13 | RECHERCHIERTE SACHGEBIETE (IPC)<br><br>A01N |
| X | DATABASE WPI<br>Section Ch, Week 199921<br>Derwent Publications Ltd., London, GB;<br>Class C02, AN 1999-248389<br>XP002178207<br>& JP 11 071210 A (SANAI SEKIYU KK)<br>16. März 1999 (1999-03-16)<br>* Zusammenfassung *<br>-----<br><br>-/-- | 1,3-13 | |

Der vorliegende Recherchenbericht wurde für alle Patentansprüche erstellt

| Recherchenort | Abschlußdatum der Recherche | Prüfer |
|---|---|---|
| München | 26. Mai 2006 | Klaver, J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..................................................................................
& : Mitglied der gleichen Patentfamilie, übereinstimmendes
    Dokument

EPO FORM 1503 03.82 (P04C03)

Europäisches
Patentamt

**EUROPÄISCHER RECHERCHENBERICHT**

Nummer der Anmeldung

EP 06 00 7823

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | WO 01/62081 A (KUGLER MARTIN ;BAYER AG (DE); WACHTLER PETER (DE)) 30. August 2001 (2001-08-30) * Seite 1, Zeilen 5-7 * * Seite 2, Zeile 25; Beispiel 3 * ----- | 1,3-13 | |
| X | EP 0 513 637 A (GERMO SPA) 19. November 1992 (1992-11-19) * Seite 2, Zeilen 14-43; Beispiele I-V * ----- | 1-13 | |
| X | EP 0 694 258 A (BOEHRINGER MANNHEIM GMBH) 31. Januar 1996 (1996-01-31) * Seite 2, Zeilen 27-29,44,45 * * Seite 3, Spalten 21-25; Beispiel 1 * ----- | 1,3-13 | |
| X | WO 99/08530 A (BAUM RUEDIGER ;WUNDER THOMAS (DE); ANTONI ZIMMERMANN DAGMAR (DE);) 25. Februar 1999 (1999-02-25) * Seite 3, Zeilen 5-20 * * Seite 4, Zeile 11 - Seite 7, Zeile 16; Beispiele 1-20 * ----- | 1,3-13 | |
| X | WO 96/01562 A (HOLE TRISTAN ;WOOD IAN (GB); WOOLARD TREVOR (GB)) 25. Januar 1996 (1996-01-25) * Seite 4, Absatz 2 - Seite 5, Absatz 3; Anspruch 5; Beispiele 1-7 * ----- | 1-13 | **RECHERCHIERTE SACHGEBIETE (IPC)** |
| A | US 5 464 850 A (VOO LIANN ET AL) 7. November 1995 (1995-11-07) * Spalte 3, Zeile 45 - Spalte 4, Zeile 53; Beispiele 1-4 * ----- | 1-13 | |

Der vorliegende Recherchenbericht wurde für alle Patentansprüche erstellt

| Recherchenort | Abschlußdatum der Recherche | Prüfer |
|---|---|---|
| München | 26. Mai 2006 | Klaver, J |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 7823

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2006

| Im Recherchenbericht angeführtes Patentdokument | Datum der Veröffentlichung | Mitglied(er) der Patentfamilie | Datum der Veröffentlichung |
|---|---|---|---|
| WO 0067578 A | 16-11-2000 | AU 5651299 A<br>JP 2000319113 A | 21-11-2000<br>21-11-2000 |
| US 4732905 A | 22-03-1988 | CA 1303485 C | 16-06-1992 |
| EP 0398795 A | 22-11-1990 | CA 2016958 A1<br>DE 69026138 D1<br>DE 69026138 T2<br>KR 143416 B1 | 17-11-1990<br>02-05-1996<br>01-08-1996<br>15-07-1998 |
| WO 0028823 A | 25-05-2000 | AT 252833 T<br>AU 751719 B2<br>AU 1186700 A<br>CA 2351619 A1<br>CN 1335750 A<br>DE 69912472 D1<br>DE 69912472 T2<br>EP 1133231 A1<br>ES 2211230 T3<br>JP 3637281 B2<br>JP 2002529482 T<br>KR 2000032593 A | 15-11-2003<br>22-08-2002<br>05-06-2000<br>25-05-2000<br>13-02-2002<br>04-12-2003<br>19-08-2004<br>19-09-2001<br>01-07-2004<br>13-04-2005<br>10-09-2002<br>15-06-2000 |
| JP 11071210 A | 16-03-1999 | KEINE | |
| WO 0162081 A | 30-08-2001 | AT 293884 T<br>AU 4061301 A<br>BR 0108692 A<br>DE 10008507 A1<br>EP 1259110 A2<br>ES 2240424 T3<br>JP 2003523367 T<br>NO 20023972 A<br>PT 1259110 T<br>US 2003012685 A1 | 15-05-2005<br>03-09-2001<br>10-12-2002<br>30-08-2001<br>27-11-2002<br>16-10-2005<br>05-08-2003<br>21-08-2002<br>31-08-2005<br>16-01-2003 |
| EP 0513637 A | 19-11-1992 | IT 1247918 B | 05-01-1995 |
| EP 0694258 A | 31-01-1996 | AT 205048 T<br>DE 4422374 A1<br>ES 2160650 T3<br>JP 2885666 B2<br>JP 8099909 A<br>US 6013527 A | 15-09-2001<br>04-01-1996<br>16-11-2001<br>26-04-1999<br>16-04-1996<br>11-01-2000 |
| WO 9908530 A | 25-02-1999 | AT 227082 T | 15-11-2002 |

Für nähere Einzelheiten zu diesem Anhang : siehe Amtsblatt des Europäischen Patentamts, Nr.12/82

**EP 1 676 479 A1**

**ANHANG ZUM EUROPÄISCHEN RECHERCHENBERICHT**
**ÜBER DIE EUROPÄISCHE PATENTANMELDUNG NR.**

EP 06 00 7823

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2006

| Im Recherchenbericht angeführtes Patentdokument | | Datum der Veröffentlichung | Mitglied(er) der Patentfamilie | | Datum der Veröffentlichung |
|---|---|---|---|---|---|
| WO 9908530 | A | | AU | 731655 B2 | 05-04-2001 |
| | | | AU | 9345398 A | 08-03-1999 |
| | | | BR | 9811955 A | 15-08-2000 |
| | | | CA | 2299227 A1 | 25-02-1999 |
| | | | CN | 1267192 A | 20-09-2000 |
| | | | CZ | 20000539 A3 | 14-06-2000 |
| | | | DE | 59806209 D1 | 12-12-2002 |
| | | | DK | 1005271 T3 | 10-03-2003 |
| | | | EP | 0900525 A1 | 10-03-1999 |
| | | | ES | 2188013 T3 | 16-06-2003 |
| | | | HU | 0003297 A2 | 29-01-2001 |
| | | | JP | 2001515016 T | 18-09-2001 |
| | | | NO | 20000749 A | 18-04-2000 |
| | | | PL | 338711 A1 | 20-11-2000 |
| | | | PT | 1005271 T | 31-03-2003 |
| | | | TR | 200000437 T2 | 21-08-2000 |
| | | | US | 6361788 B1 | 26-03-2002 |
| WO 9601562 | A | 25-01-1996 | AU | 2895095 A | 09-02-1996 |
| | | | EP | 0769907 A1 | 02-05-1997 |
| US 5464850 | A | 07-11-1995 | KEINE | | |

EPO FORM P0461

Für nähere Einzelheiten zu diesem Anhang : siehe Amtsblatt des Europäischen Patentamts, Nr.12/82